# EUROPÄISCHE PATENTSCHRIFT

(11) **EP 1 111 740 B1**
(45) Veröffentlichungstag und Bekanntmachung des Hinweises auf die Patenterteilung: **25.01.2006**
(21) Anmeldenummer: 00125807.8
(22) Anmeldetag: 24.11.2000
(51) Int. Cl.: H01S 3/067, H01S 3/094

(54) **Anordnung zur Übertragung von Pumplicht hoher Leistung**
Transmission method of high power optical pumping
Procédé de transmission de pompage optique de puissance

(30) Priorität: 20.12.1999 DE 19961515
(43) Veröffentlichungstag der Anmeldung: 27.06.2001
(73) Patentinhaber: SIEMENS AKTIENGESELLSCHAFT, 80333 München (DE)
(72) Erfinder: Proebster, Walter, Dr., 81545 München (DE)

(56) Entgegenhaltungen:
- EP-A- 0 455 024
- EP-A- 0 722 232
- WO-A-95/10868
- WO-A-99/43117
- US-A- 5 392 377
- US-A- 5 561 553
- US-A- 5 883 736
- US-A- 5 930 029
- US-A- 5 936 763
- US-A- 5 991 070

## Beschreibung

Die Erfindung betrifft eine Anordnung zur Fernspeisung eines Faserverstärkers mit Pumplicht nach dem Oberbegriff des Patentanspruchs 1.

Bei der Übertragung von Daten über optische Fasern ist es bei langen Übertragungsstrecken wegen der Dämpfung der Fasern häufig notwendig, optische Faserverstärker einzusetzen Ein Faserverstärker besteht im wesentlichen aus einer meist mit Erbium dotierten Faser, einer Koppeleinrichtung zum Einkoppeln des Pumplichts in die Faser, und einer Regeleinrichtung.

Wenn es nicht möglich oder aus Gründen der Zugänglichkeit nicht erwünscht ist, die Pumpquelle in der Nähe des Faserverstärkers anzuordnen, dann wird das Pumplicht über eine zusätzliche Faser zum Faserverstärker übertragen, wo es kontradirektional oder kodirektional zur Übertragungsrichtung der Daten eingespeist werden kann. Ebenso ist die gleichzeitige Einspeisung in beiden Richtungen möglich. Es wird Pumplicht mit einer Wellenlänge von ca. 1480 nm verwendet, das nur gering gedämpft wird. Die Einkopplung in die Übertragungsfaser erfolgt ebenfalls aus Dämpfungsgründen meist über Wellenlängenmultiplexer.

Bei der Verwendung einer Multi-Mode-Laserquelle zur Erzeugung des Pumplichts ist zu beachten, daß zwar hohe Leistungen über Multi-Mode-Fasern übertragen werden können, diese jedoch eine gegenüber Monomodefasern höhere Dämpfung aufweisen.

Aus der Patentanmeldung WO 95/10868 ist ein Faserverstärker bekannt, der von einer Multi-Mode-Laserquelle gespeist wird. Hierbei wird das Pumplicht über das Cladding bzw. einen weiteren konzentrischen Faserkern in den der Datenübertragung dienenden Kern eingespeist.

Aus der Patentanmeldung WO9943117 ist ein Faserverstärker mit zuschaltbarer Pumpleistung beschrieben, die von Pumpmodulen über optische Stecker zuschaltbar ist. Die zusätzliche Pumpleistung wird benötigt, wenn Eingangssignale mit unterschiedlichen Gesamtleistungen optimal verstärkt werden sollen.

Aus US 5,930,029 ist ein optischer Faser-Verstärker mit optimaler Konversion der Pumpleistung beschrieben.

Bei den verstehend beschriebenen optischen Verstärkern wird das Problem einer Fernspeisung mit Pumplicht nicht angesprochen.

Aus dem Patent US 5,561,553 ist dagegen bereits die optische Fernspeisung eines Faser-Verstärkers bekannt. Die Fernspeisung erfolgt durch Pumplicht, das an einem Endterminal in die ebenfalls das Datensignal übertragende optische Faser eingespeist wird.

Aus dem Patent US 5,883,736 ist die optische Fernspeisung eines Faserverstärkers bekannt, bei der Pumplicht unterschiedlicher Wellenlängen zuzammen mit dem Signallicht über eine optische Faser zum Faserverstärker geführt wird.

Ferner ist aus der Patentanmeldung EP 0 722 232 A die Fernspeisung mehrerer Faserverstärker durch Pumplicht unterschiedlicher Wellenlängen bekannt. Das Pumplicht wird gekoppelt und auf mehrere Fasern aufgeteilt zu mehreren Verstärkerfasern geführt.

Wird eine Monomode-Faser zur Übertragung des Pumplichts verwendet, so ist wegen des Raman-Effektes die Leistung bei etwa einem Watt begrenzt. Zum Überbrücken weiter Übertragungsstrecken reicht diese Pumpenergie jedoch nicht aus.

Aufgabe der Erfindung ist es, eine Anordnung zur Übertragung von Pumplicht mit hoher Leistung und geringen Verlusten anzugeben.

Diese Aufgabe wird entsprechend Anspruch 1 durch die parallele Übertragung von mehreren Pumpsignalen mit unterschiedlichen Wellenlängen über jeweils eine zugeordnete Faser erreicht. Entsprechend Anspruch 2 erfolgt die Einkopplung des Pumplichts über entsprechende optische Koppler eines Multi-Clad-Faserverstärkers.

Die Erfindung ist in dem unbhängigen Ansprüchen 1 und 2 definiert.

Vorteilhafte Weiterbildungen der Erfindung sind in den Unteransprüchen angegeben.

Der besondere Vorteil der Erfindung liegt darin, daß die Fernspeisung über dämpfungsarme Monomode-Fasern erfolgen kann. Faserverstärker können wegen der relativ hohen Zeitkonstanten der stimulierten Energiezustände durch Wellenlängen-Multiplexsignale gepumpt werden. Um die Dämpfung bei der Einkopplung des Pumplichts in die Verstärkerfaser niedrig zu halten, werden entweder Wellenlängen-Multiplexer zum Einkoppeln verwendet. Ein Multi-Clad-Verstärker mit mehreren optischen Kopplern hat ebenfalls den Vorteil, daß im Gegensatz zu anderen optischen Kopplern das Einspeisen des Pumplichts mit geringer Dämpfung erfolgt.

Obwohl die Erfindung mit jeder Art von optischen Fasern durchgeführt werden kann, ist im Regelfall die Verwendung von Monomode-Fasern wegen der geringeren Dämpfung vorzuziehen, wobei als Pumplichtquelle ein frequenzmäßiger Multimode-Laser verwendet wird, um Stimmulierte Brillouin Streuung zu vermeiden.

Ausführungsbeispiele der Erfindung werden anhand von Figuren näher beschrieben.

Es zeigen:
- Figur 1: einen Faserverstärker, der über Wellenlängen-Multiplexer ferngepumpt wird,
- Figur 2: einen ferngepumpten Multi-Clad-Faserverstärker und
- Figur 3: einen Multi-Clad-Verstärker.

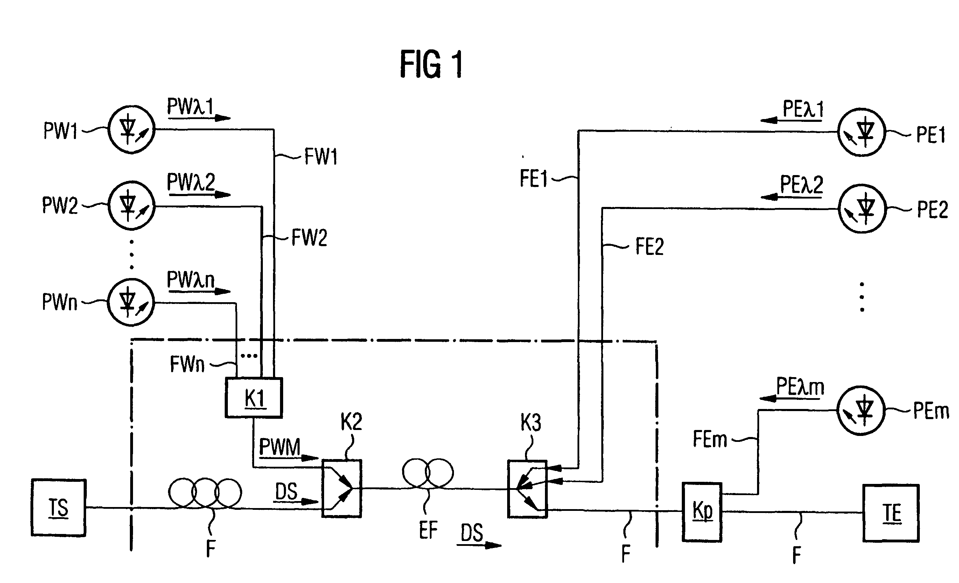

In Figur 1 ist eine Übertragungseinrichtung mit einem Sendeterminal TS einer Übertragungsfaser F, einem Faserverstärker K2, EF, K3 und einem Empfangsterminal TE dargestellt. Bei entsprechend ausgeführten Terminals ist die Anordnung prinzipiell auch für eine bidirektionale Datenübertragung geeignet. Ist der Faserverstärker K2, EF, K3, beispielsweise bei Unterwasser-Übertragungssystemen, schwer zugänglich und muß außerdem die Datenübertragung über eine sehr große Distanz erfolgen, dann ist es notwendig, dem Faserverstärker eine beträchtliche Pumpenergie zuzuführen. Als Pumpsignalquellen PW1 bis PWn werden "longitudinale" Multimoden-Laser verwendet, die ein breitbandiges Spektrum abgeben. Die Wellenlängen λ1 bis λn der Pumpsignale PWλ1 bis PWλn weisen jeweils unterschiedliche Wellenlängen im 1480 nm Wellenlängenbereich auf. Jedes Pumpsignal PWλ1 bis PWλn wird über eine separate MonoMode-Faser FW1 bis FWn übertragen (mehrere Pumpsignale geringerer Leistung un unterschiedlicher Wellenlänge können auch gemeinsam über eine Faser übertragen werden) und in einer ersten Koppeleinrichtung K1, einem Wellenlängen-Multiplexer, über optische Filter zu einem Multiplex-Pumpsignal PWM zusammenfaßt. Über eine zweite Koppeleinrichtung K2, die ebenfalls als Wellenlängen-Multiplexer ausgebildet ist, um die Dämpfung gering zu halten, werden das zu übertragende Datensignal DS und das Multiplex-Pumpsignal PWM in eine Verstärkungsfaser EF (beispielsweise Erbium dotiert) eingespeist. Beide Koppeleinrichtungen lassen sich zusammenfassen. Auch ist eine Einspeisung der Pumpsignale über mehrere dieser Koppeleinrichtungen K1 und/oder K2 in eine Verstärkerfaser möglich.

In diesem Ausführungsbeispiel erfolgt zusätzlich eine zur Übertragungsrichtung des Datensignals DS kontradirektionale Einspeisung durch weitere Pumplichtquellen PE1 und PE2, deren Pumpsignale PEλ1 und PEλ2 über separate Fasern FE1 und FE2 zu einer dritten Koppeleinrichtung KE3 übertragen werden, die als Wellenlängen-Multiplexer und Wellenlängen-Demultiplexer ausgebildet ist. Über diese Koppeleinrichtung K3 werden nicht nur beide Pumpsignale eingespeist, sondern auch das Datensignal abgezweigt (oder kodirektional eingespeist). Es ist noch eine weitere Koppeleinrichtung Kp vorgesehen, über die ein weiteres Pumpsignal PEλm entgegen der Übertragungsrichtung des Datensignals in die Übertragungsfaser eingespeist und über die dritte Koppeleinrichtung K3 dem Faserverstärker zugeführt wird. Die Einspeisung in die Übertragungsfaser bewirkt eine weitere Signalverstärkung durch den Ramaneffekt.

In dem Ausführungsbeispiel sind die meisten Pumplichtquellen zusammen mit dem Sendeterminal TS an Land untergebracht, während der Faserverstärker etwa in der Mitte des Seekabels angeordnet ist. Lediglich eine für kontradirektionales Pumpen vorgesehene Pumplichtquelle PEm ist auf der Seite des Empfangsterminals TE angeordnet. Die verschiedenen Bereiche sind durch strichpunktierte Linien abgegrenzt.

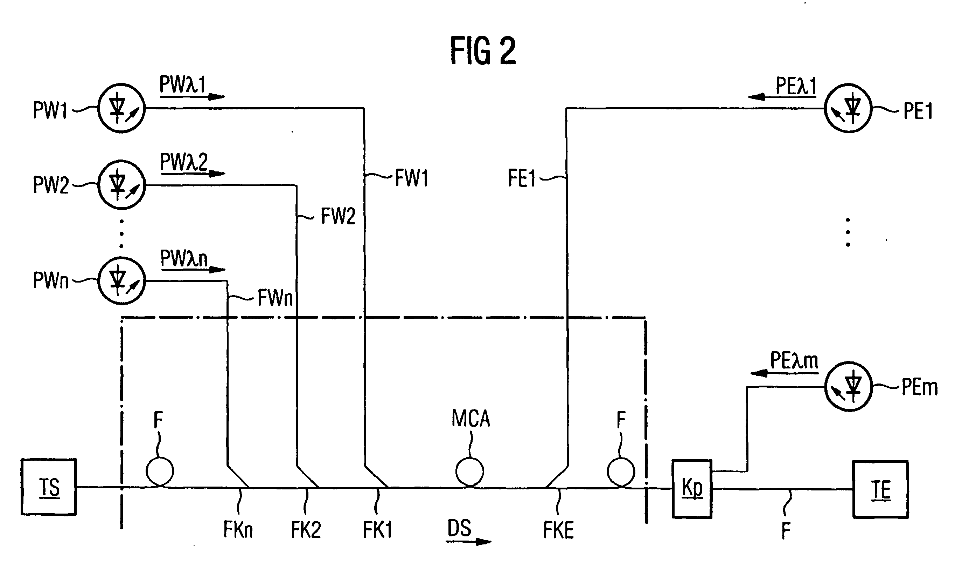

Figur 2 zeigt eine entsprechende Anordnung, die jedoch einen Multi-Clad-Faserverstärker MCA mit mehreren Faserkopplern FK1 bis FKn, FKE verwendet.

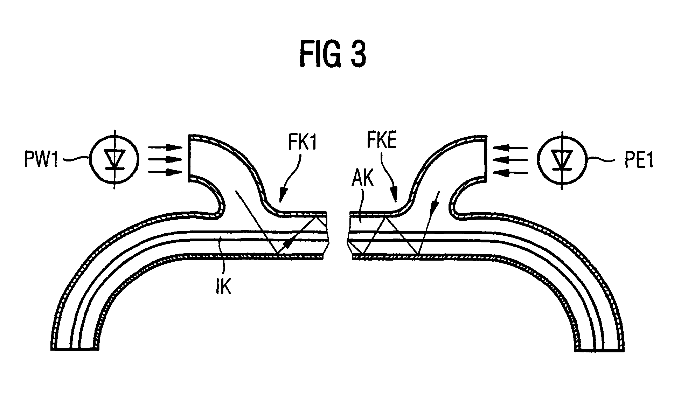

In Figur 3 ist ein solcher Multi-Clad-Faserverstärker mit zwei Faserkopplern FK1 FKE genauer dargestellt. Die Pumpsignale werden von einem äußeren Faserkern AK in einen inneren Faserkern eingekoppelt. Durch die Faserkoppler ist eine relativ verlustfreie Einspeisung des Pumplichts möglich.

In Figur 2 werden die Pumpsignale PWλ1 bis PWλn wieder über separate Fasern FW1 bis FWn übertragen. Zusätzlich ist zur contradirektionalen Einspeisung von Pumplicht ein weiterer Faserkoppler FKE vorgesehen, der über die Fasern FE1 mit der Pumplichtquelle PE1 verbunden ist. Auch hier kann eine zusätzliche Einspeisung von Pumplicht über die weitere Koppeleinrichtung K_{P} von der Pumplichtquelle PEm erfolgen.

Zu ergänzen ist noch, daß Licht derselben Wellenlänge sowohl für die kodirektionale als auch für die kontradirektionale Einspeisung verwendet werden kann.

## Patentansprüche

1. Anordnung zur Fernspeisung eines Faserverstärkers (EF) mit Pumplicht, wobei
zur Fernspeisung des Faserverstärkers (EF) über große Distanzen mit Pumplicht hoher Leistung, die wegen des Raman-Effektes nicht über eine einzige optische Faser übertragen werden kann, mehrere Pumplichtquellen (PW1 bis PWn; PE1, PE2) mit unterschiedlichen Wellenlängen (λ1, ..., λn) vorgesehen sind, deren Pumpsignale (PWλ1, ..PWλN; PEλ1, ..PEλ2) parallel über mehrere optische Monomode-Fasern (FW1, ..., FWn; FE1, FE2) zum Faserverstärker (EF) geführt werden und dort - gegebenenfalls durch eine erste Koppeleinrichtung (K1) zu einem Pumplicht-Multiplexsignal (PWM) zusammengefaßt - über mindestens eine Koppeleinrichtung (K2, K3) in eine Verstärkerfaser des Faserverstärkers (EF) einspeist werden.

2. Anordnung zur Fernspeisung eines Multi-Clad-Faserverstärkers (MCA) mit Pumplicht, wobei
zur Fernspeisung der Multi-Clad-Faserverstärkers (MCA) über große Distanzen mit Pumplicht hoher Leistung, die wegen des Raman-Effektes nicht über eine einzige optische Faser übertragen werden kann, mehrere Pumplichtquellen (PW1, .. PWn; PE1) mit unterschiedlichen Wellenlängen (λ1,..., λn) vorgesehen sind, deren Pumpsignale (PWλ1, .. PWλn; PEλ1) a parallel über mehrere optische Monomode-Fasern (FW1,..., FWn; FE1) zum Faserverstärker (MCA) geführt sind und dort über optische Faserkoppler (FK1,.., FKn; FKE) in einen inneren Faserkern (IK) des Multi-Clad-Faserverstärkers (MCA) eingespeist werden.

3. Anordnung nach einem der vorangehenden Ansprüche,
**dadurch gekennzeichnet,**
**daß** der Faserverstärker (EF) oder Multi-Clad-Faserverstärker (MCA) beidseitig gepumpt wird.

4. Anordnung nach einem der vorhergehenden Ansprüche,
**dadurch gekennzeichnet,**
**daß** als Pumplichtquellen (PW1, ..PWn; PE1, PE2, PEm) longitudinale Multimoden-Laser, die ein breitbandiges Spektrum abgeben, vorgesehen sind.

## Revendications

1. Agencement d'alimentation d'un amplificateur à fibre EF à distance en lumière de pompage,
dans lequel pour l'alimentation à distance de l'amplificateur à fibre EF sur de grandes distances en lumière de pompage de haute puissance qui, à cause de l'effet Raman, ne peut être transmise par une seule fibre optique, on prévoit plusieurs sources de lumière de pompage (PW1 à PWn; PE1, PE2) de différentes longueurs d'onde (λ1, ..., λn) dont les signaux de pompage (PWλ1, ..., PWλn; PEλ1, ..., PEλ2) sont apportés en parallèle par plusieurs fibres optiques monomodales (FW1, ..., FWn; FE1, FE2) à l'amplificateur à fibre EF pour y être injectés dans une fibre d'amplification de l'amplificateur à fibre EF par l'intermédiaire d'au moins un dispositif de couplage (K2, K3), éventuellement en étant assemblés par un premier dispositif de couplage (K1) en un signal multiplexé de lumière de pompage (PWn).

2. Agencement d'alimentation à distance d'un amplificateur à fibre Multi-Clad (MCA) en lumière de pompage,
dans lequel pour l'alimentation à distance de l'amplificateur à fibre Multi-Clad (MCA) sur de grandes distances en lumière de pompage de haute puissance, qui à cause de l'effet Raman, ne peut être transmise sur de grandes distances par une seule fibre optique, on prévoit plusieurs sources de lumière de pompage (PW1, ..., PWn; PE1) de différentes longueurs d'onde (λ1, ..., λn) dont les signaux de pompage (PWλ1, ..., PWλn; PEλ1) sont apportés en parallèle par plusieurs fibres optiques monomodales (FW1 ..., FWn; FE1) à l'amplificateur à fibre (MCA) pour y être injectés par l'intermédiaire de coupleurs de fibres optiques (FK1, ..., FKn; FKE) dans un noyau de fibre intérieur (IK) de l'amplificateur à fibre Multi-Clad (MCA).

3. Agencement selon l'une des revendications précédentes,
**caractérisé en ce que**
l'amplificateur à fibre (EF) ou l'amplificateur à fibre Multi-Clad (MCA) est pompé des deux côtés.

4. Agencement selon l'une des revendications précédentes,
**caractérisé en ce que**
comme sources de lumière de pompage (PW1, ..., PWn; PE1, PE2, PEm) on prévoit des lasers multimodaux longitudinaux qui délivrent un spectre à large bande.

## Claims

1. Arrangement for remotely feeding a fibre amplifier (EF) with pumping light,
in order to remotely feed the fibre amplifier (EF) over long distances with high-power pumping light, which cannot be transmitted via a single optical fibre owing to the Raman effect, a number of pumping-light sources (PW1 to PWn; PE1, PE2) having different wavelengths (λ1, ..., λn) being provided, whose pumping signals (PWλ1, ..PWλn; PEλ1, ..PEλ2) are carried in parallel via a number of optical monomode fibres (FW1, ..., FWn; FE1, FE2) to the fibre amplifier (EF) and there - combined to form a pumping-light multiplex signal (PWM) optionally by way of a first coupling device (K1) - are fed via at least one further coupling device (K2, K3) into an amplifier fibre of the fibre amplifier (EF).

2. Arrangement for a remotely feeding a multiclad fibre amplifier (MCA),
in order to remotely feed the multiclad fibre amplifier (MCA) with pumping light over long distances with high-power pumping light, which cannot be transmitted via a single optical fibre owing to the Raman effect, a number of pumping-light sources (PW1, ..PWn; PE1) having different wavelengths (λ1, ..., λn) being provided, whose pumping signals (PWλ1, ..PWλn; PWλ1) are carried in parallel via a number of optical monomode fibres (FW1, ..., FWn; FE1) to the fibre amplifier (MCA) and there are fed via optical fibre couplers (FK1, .., FKn; FKE) into an inner fibre core (IK) of the multiclad fibre amplifier (MCA).

3. Arrangement according to one of the preceding claims,
**characterized**
**in that** the fibre amplifier (EF) or the multiclad fibre amplifier (MCA) is pumped at both ends.

4. Arrangement according to one of the preceding claims,
**characterized**
**in that** longitudinal multimode lasers, which emit a broadband spectrum, are provided as pumping-light sources (PW1, ..PWn; PE1, PE2, PEm).
